# EUROPEAN PATENT SPECIFICATION

(11) **EP 4 509 646 B1**
(45) Date of publication and mention of the grant of the patent: **06.08.2025**
(21) Application number: 24176162.6
(22) Date of filing: 16.05.2024
(51) Int. Cl.: D04B 9/10, D04B 15/32, D04B 15/68, D04B 15/78

(54) **LOWER NEEDLE SELECTION DEVICE FOR DOUBLE-NEEDLECYLINDER HOSIERY MACHINE**
UNTERNADELAUSWAHLVORRICHTUNG FÜR EINE DOPPELNADELZYLINDER-STRICKMASCHINE
DISPOSITIF DE SÉLECTION D'AIGUILLE INFÉRIEURE POUR MACHINE DE BONNETERIE À DOUBLE CYLINDRE À AIGUILLE

(30) Priority: 01.06.2023 CN 202310638515
(43) Date of publication of application: 19.02.2025
(73) Proprietor: Zhejiang Weihuan Machinery Co., Ltd, Zhuji Shaoxing City Zhejiang 311800 (CN)
(72) Inventor: YU, Weihuan, Zhuji Shaoxing City (CN); ZHAO, Xiaotao, Zhuji Shaoxing City (CN); HUANG, Fuli, Zhuji Shaoxing City (CN); FANG, Zhongli, Zhuji Shaoxing City (CN); WANG, Guanghui, Zhuji Shaoxing City (CN)
(74) Representative: Sun, Yiming

(56) References cited:
- EP-A1- 0 441 005
- CN-A- 101 415 871
- CN-A- 103 946 432

## Description

### TECHNICAL FIELD

The present invention belongs to the field of knitting machinery, and more particularly relates to a double-needle-cylinder hosiery machine.

### BACKGROUND

A double-needle-cylinder hosiery machine has an upper needle cylinder and a lower needle cylinder, and a guide needle piece is arranged in a groove of each of the upper and lower needle cylinders, a loop-forming component that completes knitting is a double-end latch needle, and both ends of the double-end latch needle may cooperate with the upper and lower guide needle pieces respectively, and are used for knitting front-surface coils or back-surface coils. Therefore, the double-needle-cylinder hosiery machine needs to be provided with a needle selection device for driving the needle guide piece of the lower needle cylinder, thereby determining whether the needle guide piece cooperates with the double-end latch needle for knitting. The Chinese patent 201280056849X relates to a double-needle-cylinder hosiery machine, which mentions its needle selection device, including a connecting element. The connecting element is actuated by a cam. The connecting element may swing in a needle groove to make a heel to be hidden in the needle groove, or to protrude out of the needle groove and cooperate with the cam. In order to drive the connecting element to swing, a selector is also provided. The selector also swings in a radial direction, thereby driving the selected connecting element to act. The selector is arranged at a tail end of the connecting element away from the double-end latch needle. In practice, the selected selector is controlled in an electromagnetic mode, then the connecting element is controlled, etc.

The Chinese patent 2007800121004 also discloses an actuation method for a double-needle-cylinder hosiery machine, the latter being in accordance with the preamble of independent claim 1, which is actually a needle selection method for a double-end latch needle. It includes a connecting element and a selector. The selector swings on a radial plane of a needle cylinder, such that the connecting element swings for actions. However, in order for the selector to swing, a press is also required to make a rod member to translate in a radial direction, such that the rod member pushes the selector.

It should be pointed out that, as mentioned above, the term "needle selection" in the double-needle-cylinder hosiery machine refers that the selected guide needle piece is engaged with or disengaged from the double-end latch needle, which is actually similar to the concept of a clutch. In a single-needle-cylinder hosiery machine, there are also terms such as "needle selection" and "needle selection piece", but their meaning is that the selected needle performs or does not perform actions such as needle cleaning and needle picking, so the two terms are completely different concepts.

### SUMMARY

An object of the present invention is to provide a double-needle-cylinder hosiery machine, as defined in the independent claim attached. Preferred embodiments of the invention are defined in dependent claim attached.

According to the present invention, moving components are all restrained in the axial grooves or the radial grooves, with reliable actions and low failure rate, so needle selection can be well completed. Driven by the electromagnetic needle selector, the electromagnetic unit is arranged in the housing, through which a magnetic field is shielded. The external motion is completely performed by a mechanical structure, without any problem of electromagnetic interference.

### BRIEF DESCRIPTION OF THE DRAWINGS

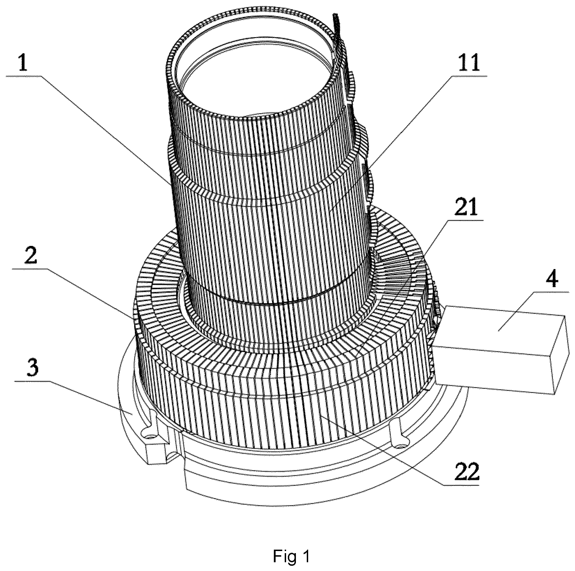

FIG. 1 is a schematic diagram of the present embodiment.

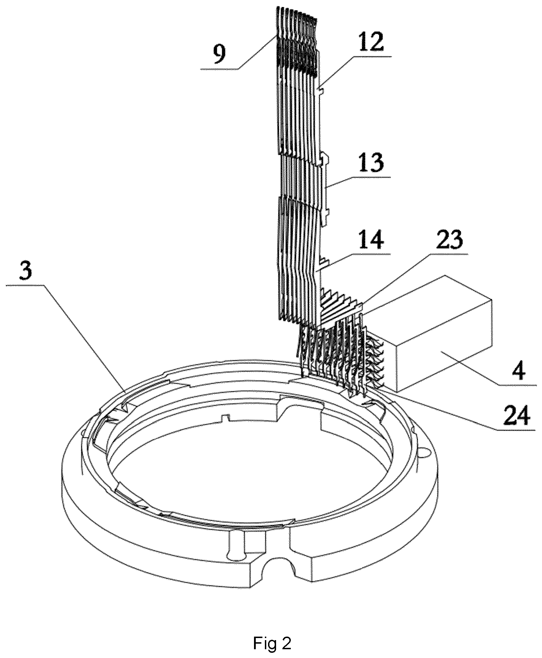

FIG. 2 is a schematic diagram after needle cylinders and a needle cylinder attached seat are removed in FIG. 1.
FIG. 3 is a schematically exploded view of various moving components.
FIG. 4 is a schematic diagram after a fixing component is additionally provided in FIG. 1.

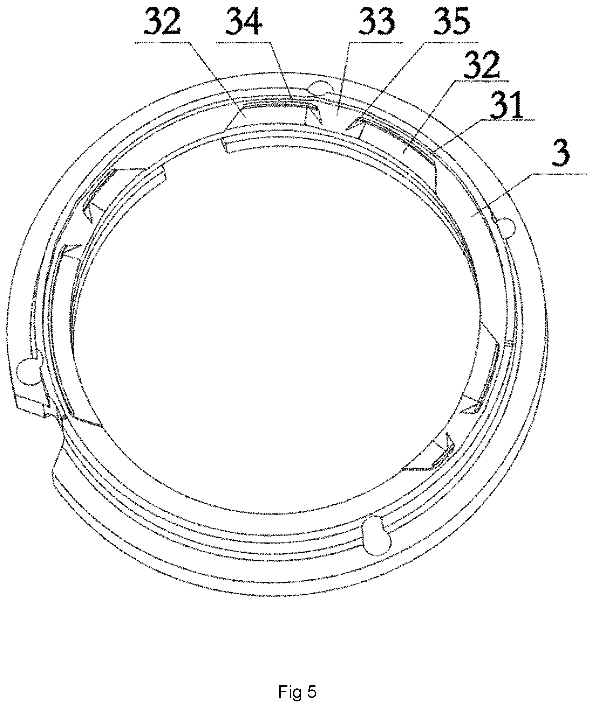

FIG. 5 is a schematic diagram of a lower steel ring.

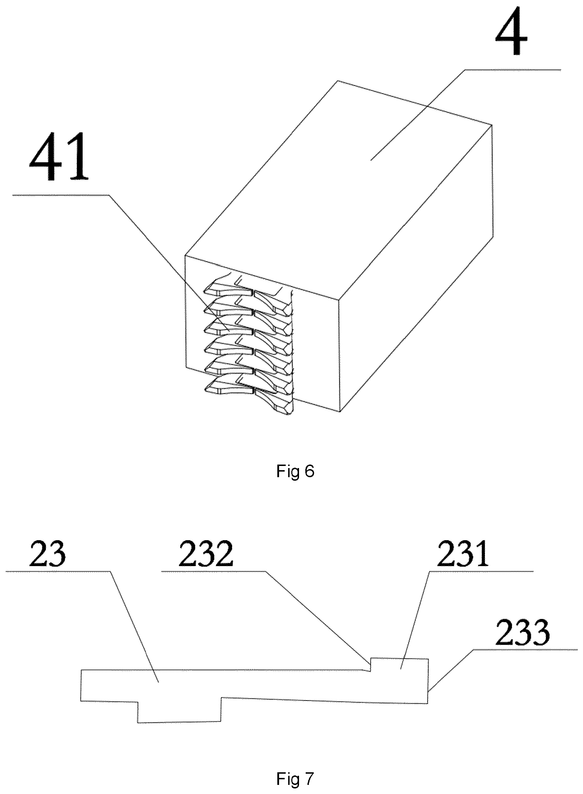

FIG. 6 is a schematic diagram of an electromagnetic needle selector.
FIG. 7 is a schematic diagram of a control piece.

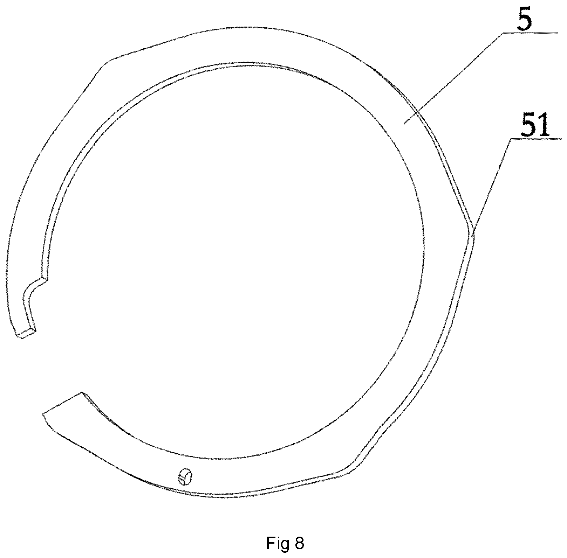

FIG. 8 is a schematic diagram of a cam.

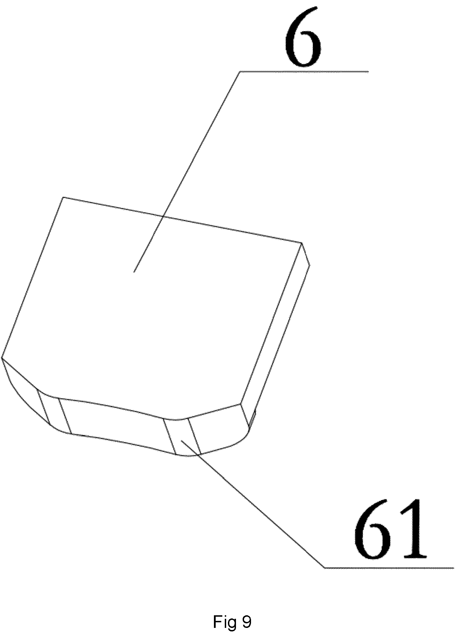

FIG. 9 is a schematic diagram of a radial pushing and pressing member.

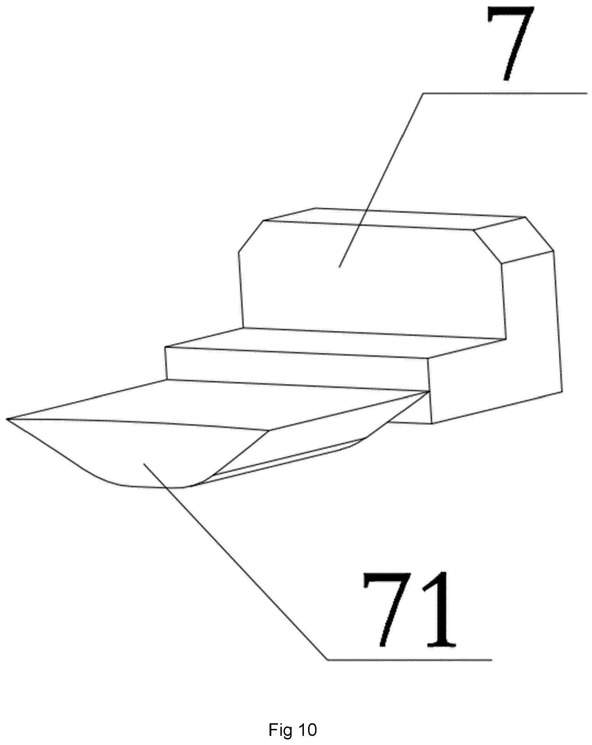

FIG. 10 is a schematic diagram of an axial pushing and pressing member.

Reference symbols represent the following components: 1-lower needle cylinder; 11-axial groove; 12-needle guide piece; 13-connecting element; 14-selector; 2-needle cylinder attached seat; 21-radial groove; 22-axial groove; 23-control piece; 231-protruding end; 232-internal stress surface; 233-external stress surface; 24-needle selection piece; 241-elastic end; 242-stressed end; 3-lower steel ring; 31-annular groove; 32-arc-shaped boss; 33-bottom surface; 34-stepped surface; 35-inclined surface; 4-electromagnetic needle selector; 41-cutter head; 5-cam; 51-flange; 6-radial pushing and pressing member; 61-radial pushing and pressing surface; 7-axial pushing and pressing member; 71-axial pushing and pressing surface; and 9-double-end latch needle.

### DETAILED DESCRIPTION OF THE INVENTION

Referring to drawings, the present embodiment includes a lower needle cylinder 1, a needle cylinder attached seat 2 and a lower steel ring 3 from top to bottom, which are arranged coaxially, wherein the lower needle cylinder 1 and the needle cylinder attached seat 2 are capable of rotating synchronously. An outer wall of the lower needle cylinder 1 is provided with a plurality of axial grooves 11, a top surface of the needle cylinder attached seat is provided with a plurality of radial grooves 21, and an outer wall of the needle cylinder attached seat is provided with a plurality of axial grooves 22. The axial grooves 11, the radial grooves 21 and the axial grooves 22 in the same phase are in one-to-one correspondence to a group of grooves.

A double-end latch needle 9, a needle guide piece 12, a connecting element 13 and a selector 14 are arranged from top to bottom inside each axial groove 11 of the lower needle cylinder. A control piece 23 is arranged inside each radial groove 21 of the needle cylinder attached seat. A needle section piece 24 is arranged in the axial groove 22. These components are arranged in the grooves and perform a circular motion as the rotation of the lower needle cylinder and the needle cylinder attached seat, and are thus collectively referred to as moving components.

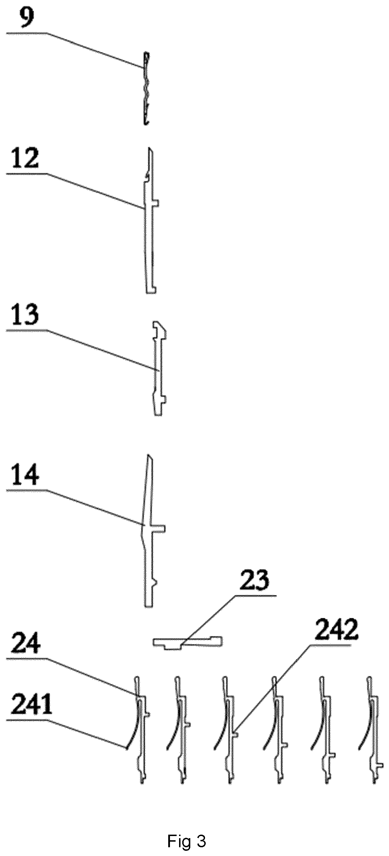

For the sake of convenience, only some of the moving components are shown in the drawings. The other moving components in FIG. 3 are regarded as a group, but six needle selection pieces are shown. It can be seen in the drawings that a cantilever 241 is arranged on one side of the needle selection piece 24 and becomes its elastic end, and the other side of the needle selection piece 24 has a stressed end 242. The stressed ends of the respective needle selection pieces have different heights and are arranged in sequence.

The lower steel ring 3 has a circle of annular groove 31. Three pairs of arc-shaped bosses are arranged inside the annular groove. Since their structure and function are basically the same, only one pair of arc-shaped bosses is introduced here. Each arc-shaped boss 32 is arc-shaped in a circumferential direction and is concentric with the annular groove 31. A pair of arc-shaped bosses 32 share the bottom surface 33. The bottom surface 33 has the same height as the annular groove 31. Each arc-shaped boss has a stepped surface 34 higher than the bottom surface, and an inclined surface 35 connecting the bottom surface and the stepped surface. The inclined surfaces 35 of a pair of arc-shaped bosses are symmetrically arranged. The preferred embodiment is introduced here. According to the present invention, the arc-shaped bosses may also not be arranged in pairs, so the inclined surfaces of the respective arc-shaped bosses have slopes of the same direction on the circumference.

The electromagnetic needle selector has six cutter heads 41 that extend out of the housing. The respective cutter heads are arranged in parallel in a height direction, corresponding to different stressed end heights of the six needle selection pieces. A top surface of each bit is a concave surface composed of two inclined surfaces that are symmetrical bilaterally.

An outer edge of the cam 5 has three flanges 51 which are in smooth transition with the main body. A surface of the radial pushing and pressing member 6 facing the needle cylinder attached surface is a radial pushing and pressing surface 61, and this radial pushing and pressing surface is a smooth arc surface that protrudes outward. The axial pushing and pressing member 7 has a smooth arc surface below that protrudes downward, and this arc surface is the axial pushing and pressing surface 71.

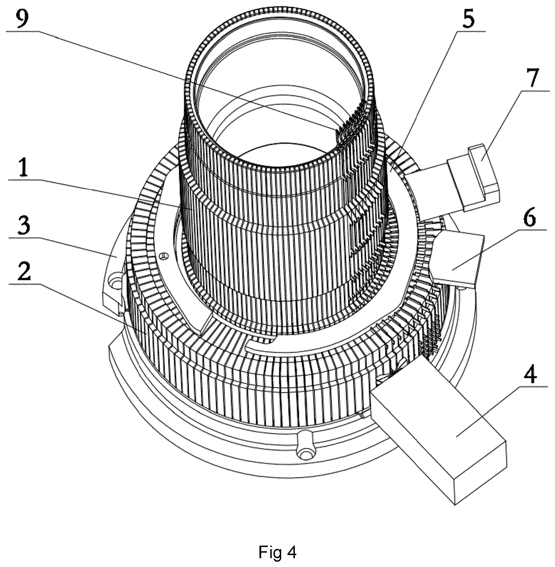

As shown in FIG. 4, one electromagnetic needle selector, one flange, one radial pushing and pressing member and one axial pushing and pressing member form a group. In FIG. 4, a rotation direction of the lower needle cylinder and the needle cylinder attached seat is counterclockwise, that is, the moving components in each group of grooves pass through these fixed components in the above sequence. When the selected moving component passes through the needle selector 4, the corresponding cutter head 41 of the needle selector extends out and abuts against the stressed end 242 of the corresponding needle selection piece, thereby pushing the needle selection piece inward against an elastic force of the elastic end 241 of the needle selection piece. Since the extending position of the cutter head corresponds to an opening between a pair of arc-shaped bosses, that is, at the bottom surface 33, the needle selection piece is pushed away from an original trajectory of the annular groove 31, and enters the arc-shaped boss 32, and in the subsequent circular motion, "climbs" onto the stepped surface 34 along the inclined surface 35. That is, as viewed from the axial direction of the needle cylinders, the position of the selected needle selection piece is raised. After the needle selection piece is raised, the control piece 23 is jacked, such that a protruding portion 231 at the rear end of the control piece is exposed out of the radial groove 21 and may be pressed by other components. When the selected moving component passes through the flanges 51 of the cam, the flanges act on the internal stress surface 232, and push the control piece outward, that is, away from the needle cylinder axis. When the selected moving component passes through the radial pushing and pressing member 6, the pushing and pressing surface 61 acts on the external stress surface 233, and pushes the control piece inward, that is, close to the needle cylinder axis. When the selected moving component passes through the axial pushing and pressing member 7, the pushing and pressing surface 71 acts on a top surface of the protruding portion 231, and presses the control piece down into the radial groove 21. Through the translation of the control piece 23 in the radial groove 21, the selector 14 is pressed, and then the connecting element 13 and the needle guide piece 12 are actuated, all of which are of the prior art and recorded in detail in the literature such as the Chinese patent 2007800121004, which will not be repeated here.

If the moving component that is not selected passes through the electromagnetic needle selector, the cutter head does not extend out, and the needle selection piece still moves inside the annular groove 31, and the actions described in the aforesaid paragraph do not occur.

## Claims

1. A double-needle-cylinder hosiery machine, comprising:
an upper needle cylinder, a lower needle cylinder (1) and a double-end latch needle (9), wherein an outer wall of each of the upper needle cylinder and the lower needle cylinder (1) is provided with a plurality of axial grooves (11) and used to accommodate a knitting component;
a needle guide piece (12) is arranged in each axial groove (11) of the lower needle cylinder (1), and is engaged with or disengaged from the double-end latch needle (9) by means of an axial motion, thereby controlling the double-end latch needle (9) to knit on the lower needle cylinder (1) or the upper needle cylinder; the guide needle piece (12) is driven by a selector (14) through a connecting element (13); the selector (14) and the connecting element (13) are both arranged in the axial groove (11) of the lower needle cylinder(1);
a needle cylinder attached seat (2) is arranged at the lower part of the lower needle cylinder (1); the needle cylinder attached seat (2) sleeves the lower needle cylinder (1), and is coaxial with and in clearance fit with the lower needle cylinder; a top surface of the needle cylinder attached seat (2) is provided with a plurality of radial grooves (21), an outer wall of the needle cylinder attached seat (2) is provided with a plurality of axial grooves (22), and the radial grooves (21) and the axial grooves (22) are in one-to-one correspondence with each other and are in one-to-one correspondence to the axial grooves (11) formed in the outer wall of the lower needle cylinder (1);
a control piece (23) is arranged in each radial groove (21) in the top surface of the needle cylinder attached seat (2); the control piece (23) is capable of sliding in the radial groove (21); the control piece (23) has a protruding end (231), and both sides of the protruding end (231) that are close to and away from a needle cylinder axis are an internal stress surface (232) and an external stress surface (233), respectively;
a radial pushing and pressing member (6) is arranged outside the top surface of the needle cylinder attached seat (2) and has an inward pushing and pressing surface that cooperates with the external stress surface (233) of the control piece (23); and
an axial pushing and pressing member (7) is arranged above the top surface of the needle cylinder attached seat (2) and has a downward pushing and pressing surface (71) that cooperates with a top surface of the protruding end (231) of the control piece (23);
**characterized in that**,
a needle selection piece (24) is arranged in each axial groove (22) in the outer wall of the needle cylinder attached seat (2); the needle selection piece (24) slides vertically in the axial groove (22) in the outer wall of the needle cylinder attached seat (2) under the action of a driving mechanism and abuts against a tail end of the control piece (23), such that the protruding end (231) of the control piece (23) has two states in which the radial groove (21) is exposed or the radial groove (21) is hidden; and
a fixed cam (5) is arranged on the top surface of the needle cylinder attached seat (2), wherein an outer edge of the cam (5) cooperates with the internal stress surface (232) of the control piece (23), and the outer edge of the cam (5) has a circumferential main body, is provided with a plurality of flanges (51) and is in smooth curve transition with the main body.

2. The double-needle-cylinder hosiery machine according to claim 1, wherein in a rotation direction of the needle cylinders, the components are arranged in a sequence of the driving mechanism of the needle selection piece (24), the flanges (51) of the cam (5), the radial pushing and pressing member (6), and the axial pushing and pressing member (7).

3. The double-needle-cylinder hosiery machine according to claim 2, wherein the needle selection piece (24) has a body on which a slender cantilever that extends outward is arranged; the cantilever becomes an elastic end (241) which abuts against a bottom of the axial groove (22) in the needle cylinder attached seat (2); and a stressed end (242) is arranged at an opposite side of the cantilever of the body, and the driving mechanism acts on the stressed end (242).

4. The double-needle-cylinder hosiery machine according to claim 3, wherein the driving mechanism is an electromagnetic needle selector (4) which comprises a housing; an electromagnetic unit and a cutter unit are arranged in the housing; the electromagnetic unit receives a control signal to control the action of the cutter unit; the cutter unit is connected to a cutter head (41) that extends out of the housing; and the cutter head cooperates with the stressed end (242) of the needle selection piece (24) to drive the needle selection piece (24).

5. The double-needle-cylinder hosiery machine according to claim 4, wherein in the case of a plurality of needle selection pieces (24), the stressed ends (242) of every two adjacent needle selection pieces (24) have different heights; N needle selection pieces (24) are formed into one group, and their stressed ends (242) are arranged according to a sequence of the heights of the stressed ends (242); and the electromagnetic needle selector (4) has N cutter heads (41) arranged in parallel, and each cutter head (41) corresponds to one needle selection piece (24).

6. The double-needle-cylinder hosiery machine according to any one of claims 1 to 5, wherein a lower steel ring (3) is arranged at the bottom of the needle cylinder attached seat (2), and is fixed relative to the hosiery machine, that is, the needle cylinder attached seat (2) rotates relative to the lower steel ring (3) while in operation; the lower steel ring (3) is provided with an annular groove (31); a tail end of the needle selection piece (24) extends into the annular groove (31); when the needle cylinder attached seat (2) rotates relative to the lower steel ring (3), the needle selection piece (24) slides inside the annular groove (31), that is, the annular groove (31) becomes a motion trajectory of the needle selection piece (24); a plurality of arc-shaped bosses (32) is arranged on one side of the annular groove (31) facing a circle center of the lower steel ring (3); each arc-shaped boss (32) is in an arc shape that forms a concentric circle with the annular groove (31) in a circumferential direction, and has a bottom surface (33) having the same height as the annular groove (31) in a height direction, a stepped surface (34) higher than the annular groove (31), and a smooth inclined surface (35) connecting the bottom surface (33) and the stepped surface (34).

## Patentansprüche

1. Doppel-Nadelzylinder-Strumpfwarenstrickmaschine, umfassend:
einen oberen Nadelzylinder, einen unteren Nadelzylinder (1) und eine beidseitig wirkende Zungennadel (9), wobei eine Außenwand sowohl des oberen Nadelzylinders als auch des unteren Nadelzylinders (1) mit einer Vielzahl von axialen Nuten (11) versehen ist und zur Aufnahme einer Strickkomponente dient;
ein Nadelführungselement (12) ist in jeder axialen Nut (11) des unteren Nadelzylinders (1) angeordnet und greift mittels axialer Bewegung mit der beidseitig wirkenden Zungennadel (9) ein oder aus, wodurch die beidseitig wirkende Zungennadel (9) zum Stricken am unteren Nadelzylinder (1) oder am oberen Nadelzylinder gesteuert wird; das Nadelführungselement (12) wird durch ein Auswahlelement (14) über ein Verbindungselement (13) angetrieben; das Auswahlelement (14) und das Verbindungselement (13) sind beide in der axialen Nut (11) des unteren Nadelzylinders (1) angeordnet;
einen an dem Nadelzylinder befestigten Sitz (2), der im unteren Teil des unteren Nadelzylinders (1) angeordnet ist, wobei der an dem Nadelzylinder befestigte Sitz (2) den unteren Nadelzylinder (1) ummantelt und koaxial sowie in Spielpassung mit dem unteren Nadelzylinder ausgebildet ist; eine obere Fläche des an dem Nadelzylinder befestigten Sitzes (2) ist mit einer Vielzahl von radialen Nuten (21) versehen, eine Außenwand des an dem Nadelzylinder befestigten Sitzes (2) ist mit einer Vielzahl von axialen Nuten (22) versehen, und die radialen Nuten (21) und die axialen Nuten (22) stehen jeweils in eins-zu-eins-Zuordnung zueinander und in eins-zu-eins-Zuordnung zu den axialen Nuten (11), die in der Außenwand des unteren Nadelzylinders (1) ausgebildet sind;
ein Steuerelement (23) ist in jeder radialen Nut (21) der oberen Fläche des an dem Nadelzylinder befestigten Sitzes (2) angeordnet; das Steuerelement (23) ist in der radialen Nut (21) verschiebbar; das Steuerelement (23) weist ein Vorsprungende (231) auf, wobei beide Seiten des Vorsprungendes (231), die näher zur bzw. weiter von der Nadelzylinderachse entfernt sind, jeweils eine innere Spannfläche (232) bzw. eine äußere Spannfläche (233) darstellen;
ein radial wirkendes Druckelement (6) ist außerhalb der oberen Fläche des an dem Nadelzylinder befestigten Sitzes (2) angeordnet und weist eine nach innen wirkende Druckfläche auf, die mit der äußeren Spannfläche (233) des Steuerelements (23) zusammenwirkt; und
ein axial wirkendes Druckelement (7) ist oberhalb der oberen Fläche des an dem Nadelzylinder befestigten Sitzes (2) angeordnet und weist eine nach unten wirkende Druckfläche (71) auf, die mit einer oberen Fläche des Vorsprungendes (231) des Steuerelements (23) zusammenwirkt;
**dadurch gekennzeichnet, dass**
ein Nadelwahlelement (24) in jeder axialen Nut (22) in der Außenwand des an dem Nadelzylinder befestigten Sitzes (2) angeordnet ist; das Nadelwahlelement (24) gleitet unter Wirkung eines Antriebsmechanismus vertikal in der axialen Nut (22) in der Außenwand des an dem Nadelzylinder befestigten Sitzes (2) und liegt an einem hinteren Ende des Steuerelements (23) an, so dass das Vorsprungende (231) des Steuerelements (23) zwei Zustände aufweist, in denen die radiale Nut (21) freigelegt oder verdeckt ist; und
eine feste Kurvenscheibe (5) ist auf der oberen Fläche des an dem Nadelzylinder befestigten Sitzes (2) angeordnet, wobei ein Außenrand der Kurvenscheibe (5) mit der inneren Spannfläche (232) des Steuerelements (23) zusammenwirkt, und der Außenrand der Kurvenscheibe (5) einen umlaufenden Körper aufweist, mit mehreren Flanschen (51) versehen ist und mit dem Körper in einer glatten Kurvenübergangsform verbunden ist.

2. Doppel-Nadelzylinder-Strumpfwarenstrickmaschine nach Anspruch 1, **dadurch gekennzeichnet, dass** in einer Drehrichtung der Nadelzylinder die Komponenten in der Reihenfolge des Antriebsmechanismus des Nadelwahlelements (24), der Flansche (51) der Kurvenscheibe (5), des radialen Druckelements (6) und des axialen Druckelements (7) angeordnet sind.

3. Doppel-Nadelzylinder-Strumpfwarenstrickmaschine nach Anspruch 2, **dadurch gekennzeichnet, dass** das Nadelwahlelement (24) einen Körper aufweist, an dem ein sich nach außen erstreckender, schlanker Kragarm angeordnet ist; der Kragarm bildet ein elastisches Ende (241), das an einem Boden der axialen Nut (22) im an dem Nadelzylinder befestigten Sitz (2) anliegt; und ein Krafteinleitungsende (242) ist auf der gegenüberliegenden Seite des Kragarms des Körpers angeordnet, wobei der Antriebsmechanismus auf das Krafteinleitungsende (242) einwirkt.

4. Doppel-Nadelzylinder-Strumpfwarenstrickmaschine nach Anspruch 3, **dadurch gekennzeichnet, dass** der Antriebsmechanismus ein elektromagnetischer Nadelselektor (4) ist, der ein Gehäuse aufweist; eine elektromagnetische Einheit und eine Hebeleinheit sind im Gehäuse angeordnet; die elektromagnetische Einheit empfängt ein Steuersignal zur Steuerung der Hebeleinheit; die Hebeleinheit ist mit einem Hebelkopf (41) verbunden, der aus dem Gehäuse herausragt; und der Hebelkopf wirkt mit dem Krafteinleitungsende (242) des Nadelwahlelements (24) zusammen, um das Nadelwahlelement (24) anzutreiben.

5. Doppel-Nadelzylinder-Strumpfwarenstrickmaschine nach Anspruch 4, **dadurch gekennzeichnet, dass** bei mehreren Nadelwahlelementen (24) die Krafteinleitungsenden (242) jeweils zweier benachbarter Nadelwahlelemente (24) unterschiedliche Höhen aufweisen; N Nadelwahlelemente (24) bilden eine Gruppe, und deren Krafteinleitungsenden (242) sind entsprechend einer Reihenfolge ihrer Höhen angeordnet; und der elektromagnetische Nadelselektor (4) weist N parallel angeordnete Hebelköpfe (41) auf, wobei jeder Hebelkopf (41) einem Nadelwahlelement (24) zugeordnet ist.

6. Doppel-Nadelzylinder-Strumpfwarenstrickmaschine nach einem der Ansprüche 1 bis 5, **dadurch gekennzeichnet, dass** ein unterer Stahlring (3) am unteren Ende des an dem Nadelzylinder befestigten Sitzes (2) angeordnet ist und relativ zur Strumpfwarenstrickmaschine fixiert ist, das heißt, dass sich der an dem Nadelzylinder befestigte Sitz (2) während des Betriebs relativ zum unteren Stahlring (3) dreht; der untere Stahlring (3) ist mit einer ringförmigen Nut (31) versehen; ein hinteres Ende des Nadelwahlelements (24) erstreckt sich in die ringförmige Nut (31); wenn sich der an dem Nadelzylinder befestigte Sitz (2) relativ zum unteren Stahlring (3) dreht, gleitet das Nadelwahlelement (24) innerhalb der ringförmigen Nut (31), das heißt, die ringförmige Nut (31) bildet eine Bewegungslaufbahn des Nadelwahlelements (24); eine Vielzahl von bogenförmigen Vorsprüngen (32) ist auf einer Seite der ringförmigen Nut (31) angeordnet, die dem Kreismittelpunkt des unteren Stahlrings (3) zugewandt ist; jeder bogenförmige Vorsprung (32) weist eine Bogenform auf, die konzentrisch mit der ringförmigen Nut (31) in Umfangsrichtung verläuft, und besitzt eine Bodenfläche (33) mit gleicher Höhe wie die ringförmige Nut (31) in Höhenrichtung, eine stufige Fläche (34), die höher ist als die ringförmige Nut (31), sowie eine glatte geneigte Fläche (35), die die Bodenfläche (33) und die stufige Fläche (34) verbindet.

## Revendications

1. Machine à tricoter pour bonneterie à double cylindre à aiguilles, comprenant :
un cylindre à aiguilles supérieur, un cylindre à aiguilles inférieur (1) et une aiguille à clapet double extrémité (9), la paroi extérieure de chacun des cylindres à aiguilles supérieur et inférieur (1) étant pourvue d'une pluralité de rainures axiales (11) destinées à accueillir un composant de tricotage ;
une pièce de guidage d'aiguille (12) est agencée dans chaque rainure axiale (11) du cylindre à aiguilles inférieur (1), et est en prise avec ou libérée de l'aiguille à clapet double extrémité (9) au moyen d'un mouvement axial, permettant ainsi de commander l'aiguille à clapet double extrémité (9) pour tricoter sur le cylindre à aiguilles inférieur (1) ou sur le cylindre à aiguilles supérieur ; la pièce de guidage d'aiguille (12) est entraînée par un sélecteur (14) via un élément de liaison (13) ; le sélecteur (14) et l'élément de liaison (13) sont tous deux agencés dans la rainure axiale (11) du cylindre à aiguilles inférieur (1) ;
un support fixé au cylindre à aiguilles (2) est agencé au niveau de la partie inférieure du cylindre à aiguilles inférieur (1) ; ledit support (2) entoure le cylindre à aiguilles inférieur (1), et est coaxial avec ce dernier et ajusté avec jeu ; une surface supérieure du support (2) est pourvue d'une pluralité de rainures radiales (21), une paroi extérieure du support (2) est pourvue d'une pluralité de rainures axiales (22), et les rainures radiales (21) et les rainures axiales (22) sont en correspondance un-à-un entre elles et sont en correspondance un-à-un avec les rainures axiales (11) formées dans la paroi extérieure du cylindre à aiguilles inférieur (1) ;
une pièce de commande (23) est agencée dans chaque rainure radiale (21) de la surface supérieure du support (2) ; la pièce de commande (23) est coulissante dans la rainure radiale (21) ; la pièce de commande (23) comprend une extrémité saillante (231), et les deux côtés de l'extrémité saillante (231), orientés respectivement vers et à l'opposé de l'axe du cylindre à aiguilles, forment une surface de contrainte interne (232) et une surface de contrainte externe (233) ;
un élément de poussée radiale (6) est agencé à l'extérieur de la surface supérieure du support (2) et comprend une surface de poussée vers l'intérieur coopérant avec la surface de contrainte externe (233) de la pièce de commande (23) ; et
un élément de poussée axiale (7) est agencé au-dessus de la surface supérieure du support (2) et comprend une surface de poussée vers le bas (71) coopérant avec une surface supérieure de l'extrémité saillante (231) de la pièce de commande (23) ;
**caractérisé en ce que**
une pièce de sélection d'aiguille (24) est agencée dans chaque rainure axiale (22) de la paroi extérieure du support (2) ; la pièce de sélection d'aiguille (24) coulisse verticalement dans la rainure axiale (22) sous l'action d'un mécanisme d'entraînement et s'appuie contre une extrémité arrière de la pièce de commande (23), de sorte que l'extrémité saillante (231) de la pièce de commande (23) présente deux états : un dans lequel la rainure radiale (21) est exposée et un dans lequel elle est masquée ; et
une came fixe (5) est agencée sur la surface supérieure du support (2), un bord extérieur de la came (5) coopérant avec la surface de contrainte interne (232) de la pièce de commande (23), le bord extérieur de la came (5) comprenant un corps principal circulaire, étant pourvu d'une pluralité de flasques (51) et étant relié au corps principal par une transition courbe lisse.

2. Machine à tricoter pour bonneterie à double cylindre à aiguilles selon la revendication 1, dans laquelle, dans le sens de rotation des cylindres à aiguilles, les composants sont disposés dans l'ordre suivant : le mécanisme d'entraînement de la pièce de sélection d'aiguille (24), les flasques (51) de la came (5), l'élément de poussée radiale (6) et l'élément de poussée axiale (7).

3. Machine à tricoter pour bonneterie à double cylindre à aiguilles selon la revendication 2, dans laquelle la pièce de sélection d'aiguille (24) comprend un corps sur lequel est formée une console allongée s'étendant vers l'extérieur ; la console forme une extrémité élastique (241) qui s'appuie contre le fond de la rainure axiale (22) du support (2) ; et une extrémité sollicitée (242) est formée du côté opposé de la console du corps, le mécanisme d'entraînement agissant sur l'extrémité sollicitée (242).

4. Machine à tricoter pour bonneterie à double cylindre à aiguilles selon la revendication 3, dans laquelle le mécanisme d'entraînement est un sélecteur d'aiguille électromagnétique (4) comprenant un boîtier ; une unité électromagnétique et une unité de levier sont disposées dans le boîtier ; l'unité électromagnétique reçoit un signal de commande pour actionner l'unité de levier ; l'unité de levier est reliée à une tête de levier (41) qui s'étend à l'extérieur du boîtier ; et la tête de levier coopère avec l'extrémité sollicitée (242) de la pièce de sélection d'aiguille (24) pour entraîner ladite pièce.

5. Machine à tricoter pour bonneterie à double cylindre à aiguilles selon la revendication 4, dans laquelle, dans le cas de plusieurs pièces de sélection d'aiguille (24), les extrémités sollicitées (242) de chaque paire adjacente de pièces (24) présentent des hauteurs différentes ; N pièces de sélection d'aiguille (24) forment un groupe, et leurs extrémités sollicitées (242) sont disposées selon l'ordre croissant de hauteur ; le sélecteur d'aiguille électromagnétique (4) comprend N têtes de levier (41) disposées en parallèle, chaque tête de levier (41) correspondant à une pièce de sélection d'aiguille (24).

6. Machine à tricoter pour bonneterie à double cylindre à aiguilles selon l'une quelconque des revendications 1 à 5, dans laquelle une bague en acier inférieure (3) est agencée à la base du support (2) et est fixée par rapport à la machine à tricoter, c'est-à-dire que le support (2) tourne par rapport à la bague en acier inférieure (3) pendant le fonctionnement ; la bague en acier inférieure (3) est pourvue d'une rainure annulaire (31) ; une extrémité arrière de la pièce de sélection d'aiguille (24) s'étend dans la rainure annulaire (31) ; lorsque le support (2) tourne par rapport à la bague en acier inférieure (3), la pièce de sélection d'aiguille (24) coulisse à l'intérieur de la rainure annulaire (31), ladite rainure formant alors une trajectoire de mouvement pour la pièce (24) ; une pluralité de bossages arqués (32) est agencée sur un côté de la rainure annulaire (31) faisant face au centre de la bague (3) ; chaque bossage (32) présente une forme d'arc formant un cercle concentrique avec la rainure (31) dans la direction circonférentielle, et comprend une surface de fond (33) de même hauteur que la rainure (31) en direction verticale, une surface étagée (34) plus haute que la rainure (31), et une surface inclinée lisse (35) reliant la surface de fond (33) et la surface étagée (34).
